# FASCICULE DE BREVET EUROPEEN

(11) **EP 1 135 628 B1**
(45) Date de publication et mention de la délivrance du brevet: **16.07.2003**
(21) Numéro de dépôt: 99956156.6
(22) Date de dépôt: 26.11.1999
(51) Int. Cl.: F16F 15/26

(54) **MOTEUR A COMBUSTION INTERNE COMPORTANT DES MOYENS PERFECTIONNES D'EQUILIBRAGE**
MOTOR MIT VERBESSERTEM VIBRATIONSSCHUTZ
INTERNAL COMBUSTION ENGINE COMPRISING IMPROVED BALANCING MEANS

(30) Priorité: 04.12.1998 FR 9815332
(43) Date de publication de la demande: 26.09.2001
(73) Titulaire: RENAULT SPORT, 91170 Viry-Châtillon (FR)
(72) Inventeur: BRUNET, Philippe, F-75015 Paris (FR)
(74) Mandataire: Srour, Elie
(86) Numéro de dépôt international: FR9902929
(87) Numéro de publication internationale: WO00034683

(56) Documents cités:
- DE-A- 2 147 213

## Description

L'invention concerne un moteur à combustion interne de vehicule antomobile selon le préambule de la revendication 1. Un tel moteur est connu de DE-A-2147213.

On connaît de nombreux types de moteurs à combustion interne comportant un ou plusieurs rotors d'équilibrage dynamique.

Il est en effet connu d'équilibrer un moteur à combustion interne de façon à réduire les vibrations résultant du mouvement des différentes pièces mobiles du moteur et notamment de l'équipage mobile constitué des pistons, des bielles et du vilebrequin.

Conventionnellement, les rotors d'équilibrage ont pour but de compenser soit un couple alternatif (par exemple « de galop ») soit un effort alternatif (par exemple « pilon ») qui sont engendrés par l'équipage mobile du moteur.

Classiquement, la solution consiste à disposer d'un rotor d'équilibrage réalisé sous la forme d'un arbre d'axe parallèle à celui du vilebrequin qui comporte une (ou plusieurs) masse(s) ou balourd(s), et une (ou plusieurs) masse(s) placée(s) sur le vilebrequin, la rotation de ce rotor étant synchronisée avec celle du vilebrequin à une vitesse égale de celle du vilebrequin.

Dans le cas d'un moteur à combustion interne à hautes performances, comme par exemple un moteur de compétition, cette disposition est particulièrement encombrante et de surcroît présente l'inconvénient d'augmenter considérablement le poids total du moteur.

Pour résoudre cet inconvénient, l'invention propose un dispositif d'équilibrage compact.

Dans ce but, l'invention propose un moteur à combustion interne selon la revendication 1.

Selon des modes d'exécution de l'invention :
- les balourds font corps avec les pignons et sont obtenus par fonderie, par forgeage ou par toute autre technique similaire ;
- les commandes de distribution sont réalisées par des cascades de pignons entraînées en rotation par les deux pignons d'attaque munis de balourds ;
- le moteur à combustion interne comporte deux culasses qui portent chacune deux arbres à cames, chaque paire d'arbres à cames de chaque culasse étant entraînée par une commande de distribution spécifique depuis un seul des pignons d'attaque ;
- chaque paire d'arbres à cames de chaque culasse est entraînée par une seule cascade de pignon s'étendant à une extrémité longitudinale correspondante du bloc moteur ;
- le moteur à combustion interne est un moteur en V ;
- chaque pignon d'attaque est agencé sensiblement au sommet du V du moteur au-dessus du pignon de sortie du vilebrequin par lequel il est entraîné en rotation.

Des avantages de l'invention apparaîtront à la lecture de la description détaillée qui suit pour la compréhension de laquelle on se reportera aux dessins annexés dans lesquels :
- la figure 1 est une vue avant en bout d'un moteur à combustion interne selon l'invention ;
- la figure 2 est une vue de dessus d'un moteur à combustion interne selon la figure 1, avec les rotors d'équilibrage illustrés en section axial ;
- la figure 3 est une vue en perspective d'un pignon d'attaque avec son balourd d'équilibrage, réalisé suivant l'invention.

Dans la description qui va suivre, des chiffres de référence identiques désignent des pièces identiques ou ayant des fonctions similaires.

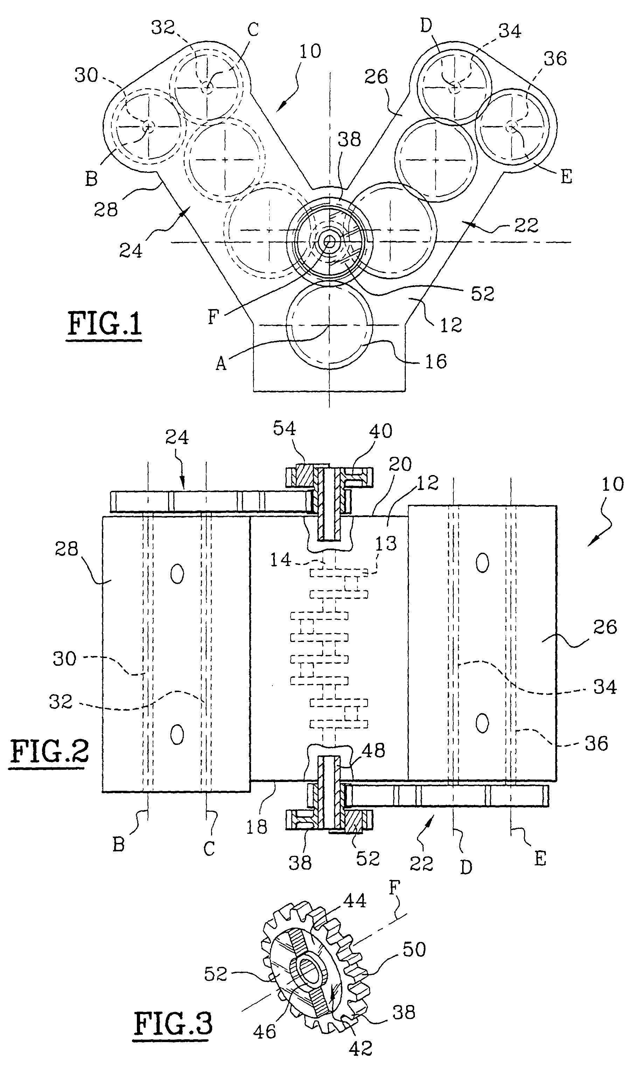

On a représenté sur les figures 1 et 2 l'ensemble d'un moteur à combustion interne 10, destiné notamment à équiper une motocyclette, réalisé conformément à l'invention.

Sur la vue de dessus de la figure 2, l'avant du moteur à combustion interne 10 correspond au bas de la figure et l'arrière du moteur à combustion interne10 correspond au haut de la figure.

Dans le mode de réalisation de l'invention illustré aux figures, le moteur à combustion interne 10 est un moteur à quatre cylindres en V qui comporte un bloc longitudinal 12 dans lequel un vilebrequin 14 d'axe A est monté à rotation. Le vilebrequin 14 est représenté en traits pointillés sur la figure 2.

Comme illustré sur la figure 1, le vilebrequin 14 porte de manière connue un pignon de sortie avant 16 qui est en saillie à une extrémité avant 18 du bloc 12 et un deuxième pignon de sortie (non représenté) qui est en saillie à l'extrémité arrière 20 du bloc 12.

Les premier et deuxième pignons de sortie, dont on peut voir le premier pignon de sortie 16 représenté aussi sur la figure 1, entraînent respectivement, comme on peut le voir sur la figure 2, une cascade de pignons 24 arrière et une cascade de pignons 22 avant de distribution qui entraînent elles-mêmes des arbres à cames 30, 32, 34, et 36 d'axes respectifs B, C, D et E parallèles à l'axe A du vilebrequin 14 du moteur 10.

Les arbres à cames 30 et 32 d'axes respectifs B et C sont portés par une première culasse 28 du bloc moteur 10 et les arbres à cames 34 et 36 d'axes respectifs D et E sont portés par une deuxième culasse 26 du bloc moteur 10. Avantageusement, chacune des culasses 26 et 28 est fixée rigidement au bloc moteur 12 du moteur à combustion interne 10.

De manière connue, les arbres à cames 30 et 32 sont entraînés par la cascade de pignons arrière de distribution 24 et les arbres à came 34 et 36 sont entraînés par la cascade de pignons avant de distribution 22. Les cascades de pignons de distribution 22 et 24 étant respectivement entraînées par les pignons de sortie correspondants disposés aux extrémités axiales du vilebrequin, les premiers pignons des cascades 22 et 24 au contact des pignons de sortie, qui sont respectivement appelés pignons d'attaque avant 38 et arrière 40, sont disposés sur un même axe F parallèle à l'axe A du vilebrequin et s'étendant sensiblement dans le plan médian axiale du moteur.

Avantageusement, les pignons d'attaque 38 et 40 sont montés à rotation dans le bloc moteur 12, au sommet du V du bloc moteur 12 et au-dessus du vilebrequin 14. Les pignons d'attaque 38 et 40 engrènent chacun avec les pignons de sortie avant 16 et arrière (non représenté) respectifs du vilebrequin. Les dimensions des pignons de sortie et d'attaque sont adaptés pour que les pignons de d'attaque tournent à la même vitesse que le vilebrequin. Ainsi, sur la figure 1, on voit l'engrènement du pignon avant de sortie 16 du vilebrequin 14 avec le pignon d'attaque avant 38 qui entraîne la cascade de pignons avant de distribution 22 pour entraîner en rotation les arbres à cames 34 et 36. Les pignons d'attaque présentent deux couronnes dentées : une première engrenant avec le pignon de sortie correspondant et une seconde avec le pignon de la cascade correspondante.

Dans le mode de réalisation préféré de l'invention, les commandes de distribution avant et arrière 22 et 24 sont réalisées sous la forme de deux cascades de pignons. Cette disposition n'est pas limitative de l'invention, et en variante (non représentée) les cascades de pignons avant et arrière de distribution 22 et 24 pourraient être aussi réalisées sous la forme d'une courroie ou d'une chaîne de distribution entraînée directement par les pignons d'attaque avant 38 et arrière 40.

De manière connue, le moteur à combustion interne 10 comporte deux rotors longitudinaux d'équilibrage qui comportent chacun un balourd destiné à permettre l'équilibrage dynamique du moteur en combinaison avec des balourds appropriés fixés directement sur le vilebrequin.

Conformément à l'invention, les rotors longitudinaux d'équilibrage sont directement liés en rotation aux pignons d'attaque avant 38 et arrière 40 associés aux cascades de pignons de distribution avant 22 et arrière 24.

Dans le mode de réalisation préféré de l'invention, et de façon non limitative de l'invention, les rotors longitudinaux d'équilibrage destinés à permettre l'équilibrage dynamique du moteur font partie des pignons d'attaque avant 38 et arrière 40.

Cette disposition compacte est particulièrement avantageuse dans la mesure où elle permet de disposer d'un moteur comportant des rotors longitudinaux d'équilibrage ne présentant pas d'encombrement transversal supérieur à celui du bloc moteur 12.

Ainsi, on a représenté le détail de la réalisation des rotors longitudinaux d'équilibrage 38 et 40 en référence à la figure 2, et on a représenté plus particulièrement le rotor longitudinal d'équilibrage 38 en référence à la figure 3.

En effet, comme l'illustre la figure 3, le pignon d'attaque 38, qui est identique au pignon d'attaque 40, comporte sur une face 42 tournée vers l'extérieur du bloc moteur 12 un logement 44 qui est réalisé sous la forme d'une gorge annulaire cylindrique disposée radialement entre d'une part une collerette cylindrique 46 destinée à recevoir intérieurement un axe 48 de support en rotation du pignon d'attaque avant 38 représenté à la figure 2, et d'autre part la périphérie intérieur d'un secteur denté 50 du pignon 38.

Le logement 44 en forme de gorge annulaire cylindrique s'étend axialement partiellement dans l'épaisseur du pignon d'attaque 38 et il reçoit un balourd 52. Le balourd 52 est réalisé sous la forme d'un secteur d'anneau qui est complémentaire du logement en forme de gorge annulaire 44 et qui permet l'équilibrage dynamique du moteur à combustion interne 10 en combinaison avec les balourds portés par le vilebrequin 14.

Avantageusement, le balourd est reçu dans le logement 44 en forme de gorge annulaire cylindrique du pignon d'attaque 38 et y est fixé par exemple par une opération de sertissage à la presse. Il peut en variante y être fixé d'une autre façon, par exemple par l'intermédiaire de vis (non représentées) ou d'un quelconque procédé de soudage.

Selon un autre mode de réalisation de l'invention, le balourd fait corps avec le pignon et est obtenu par forgeage ou moulage ou par tout autre procédé similaire.

Pour réaliser l'équilibrage dynamique du moteur le pignon d'attaque 38, et par conséquent le balourd 52, est, lors de sa mise en place, calé angulairement par rapport au vilebrequin 14 selon une position déterminée d'engrènement par rapport au pignon de sortie avant 16 du vilebrequin 14.

On remarque que le balourd 52 du pignon d'attaque avant 38 et le balourd 54 du pignon d'attaque arrière 40, représentés à la figure 2, sont diamétralement opposés (déphasage de 180°) par rapport à l'axe commun F de rotation des pignons d'attaque avant 38 et arrière 40 de façon à permettre un équilibrage parfait des masses alternatives du moteur à combustion interne 10, et notamment des pièces faisant partie de l'équipage mobile du moteur, c'est-à-dire les pistons et les bielles de celui-ci.

Cette disposition des balourds déphasés de 180° vise plus particulièrement à supprimer un couple alternatif. Dans la mesure où l'on cherche plus particulièrement à supprimer un effort alternatif, il convient au contraire de ne pas déphaser les balourds, ces derniers étant alors positionnés pour être exactement en vis-à-vis.

Ainsi, les rotors d'équilibrage intégrés aux pignons d'attaque avant 38 et arrière 40 permettent, en collaboration avec des masses d'équilibrage (non représentées) fixées sur des flasques 13 du vilebrequin 14, de réaliser un équilibrage dynamique parfait du moteur et de réduire les vibrations de ce dernier, tout en préservant la compacité transversale du bloc moteur.

Bien évidemment la présente invention n'est pas limitée à ce seul mode de réalisation et comprend tous les équivalents des solutions présentées.

En particulier, le moteur peut être un moteur mylticylindre en ligne et non en V ou bien encore en V dit « fermé » (une seule culasse).

En particulier, les pignons portant les balourds peuvent ne pas être directement au contact des pignons de sortie correspondants du vilebrequin 14. Il suffit que ces pignons portant les balourds tournent à la même vitesse que le vilebrequin 14 et présentent un même axe de rotation F parallèle à l'axe du vilebrequin 14.

## Revendications

1. Moteur à combustion interne (10) de véhicule automobile du type dans lequel un vilebrequin (14) monté à rotation dans le bloc moteur (12) entraîne des moyens longitudinaux d'équilibrage comportant des balourds (52, 54) destinés à permettre un équilibrage dynamique, lesdits moyens étant constitués par deux pignons distincts (38,40) entraînés respectivement depuis chacune des extrémités longitudinales du vilebrequin (14), **caractérisé en ce qu'**il comporte au moins deux commandes (22, 24) opposées de distribution qui sont agencées transversalement respectivement à chacune des extrémités longitudinales (18, 20) opposées du bloc moteur (12), et **en ce que** les pignons portant les balourds sont les pignons d'attaque (38, 40) desdites commandes (22, 24).

2. Moteur à combustion interne (10) de véhicule automobile selon la revendication 1, **caractérisé en ce que** les commandes de distribution sont des cascades de pignons (22,24).

3. Moteur à combustion interne (10) de véhicule automobile selon la revendication 1 ou 2, **caractérisé en ce que** les balourds sont rapportés sur les pignons (38, 40).

4. Moteur à combustion interne (10) de véhicule automobile selon la revendication 1,2 ou 3, **caractérisé en ce que** les balourds font corps avec les pignons (38, 40).

5. Moteur à combustion interne (10) de véhicule automobile selon l'une quelconque des revendications précédentes, **caractérisé en ce que** les balourds (52,54) portés par les pignons (38,40) sont déphasés l'un par rapport à l'autre, de 0° ou bien 180°.

6. Moteur à combustion interne (10) de véhicule automobile selon l'une quelconque des revendications précédentes **caractérisé en ce qu'**il comporte deux culasses (28, 26) qui portent chacune deux arbres à cames (30, 32, 34, 36), chaque paire d'arbres à cames (30, 32, 34, 36) de chaque culasse (28, 26) étant entraînée par un seul des pignons (40, 38) comportant les balourds (52,54).

7. Moteur à combustion interne (10) de véhicule automobile selon la revendication 6, **caractérisé en ce que** chaque paire d'arbres à cames (30, 32, 34, 36) de chaque culasse est entraînée par une seule commande de distribution (24, 22) et un seul des pignons (40, 38) portant les balourds (52,54).

8. Moteur à combustion interne (10) de véhicule automobile selon l'une quelconque des revendications précédentes, **caractérisé en ce qu'**il est en V.

9. Moteur à combustion interne (10) de véhicule automobile selon l'une quelconque des revendications précédentes, **caractérisé en ce que** le vilebrequin (14) est également muni de balourds d'équilibrage.

## Patentansprüche

1. Verbrennungsmotor (10) für Kraftfahrzeuge, in dem eine Kurbelwelle (14), drehbar in einem Motorblock (12) gelagert ist und die eine in Längsrichtung angeordnete Anordnung zum Schwingungsausgleich antreibt, welche Ausgleichsgewichte (52, 54) aufweist für einen dynamischen Schwingungsausgleich, wobei die Anordnung aus zwei getrennten Zahnrädern (38, 40) besteht, die von den beiden Längsenden der Kurbelwelle (14) angetrieben werden, **dadurch gekennzeichnet, dass** er wenigstens zwei sich gegenüber liegende Kraftübertragungseinrichtungen (22, 24) aufweist, die jeweils quer zu den beiden gegenüber liegenden Längsenden (18, 20) des Motorblocks (12) angeordnet sind und dass die Zahnräder, die die Ausgleichsgewichte tragen, die Antriebszahnräder (38, 40) für die Kraftübertragungseinrichtungen (22, 24) sind.

2. Verbrennungsmotor (10) für Kraftfahrzeuge nach Anspruch 1, **dadurch gekennzeichnet, dass** die Kraftübertragungseinrichtungen aus einer Anzahl von miteinander kämmender Zahnräder (22, 24) bestehen.

3. Verbrennungsmotor (10) für Kraftfahrzeuge nach Anspruch 1 oder 2, **dadurch gekennzeichnet, dass** die Ausgleichsgewichte in die Zahnräder (38, 40) eingesetzt sind.

4. Verbrennungsmotor (10) für Kraftfahrzeuge nach Ansprüchen 1, 2 oder 3, **dadurch gekennzeichnet, dass** die Ausgleichsgewichte einstückig mit den Zahnrädern (38, 40) ausgebildet sind.

5. Verbrennungsmotor (10) für Kraftfahrzeuge nach einem der vorhergehenden Ansprüche, **dadurch gekennzeichnet, dass** die von den Zahnrädern (38, 40) getragenen Ausgleichsgewichte (52, 54) um 0° oder um 180° zueinander versetzt angeordnet sind.

6. Verbrennungsmotor (10) für Kraftfahrzeuge nach einem der vorhergehenden Ansprüche, **dadurch gekennzeichnet, dass** er zwei Zylinderköpfe (28, 26) aufweist, in die jeweils zwei Nockenwellen (30, 32, 34, 36) eingesetzt sind, wobei jedes Paar Nockenwellen (28, 26) in jedem Zylinderkopf (28, 26) von einem einzigen der Zahnräder (40, 38) mit den Ausgleichsgewichten (52, 54) angetrieben wird.

7. Verbrennungsmotor (10) für Kraftfahrzeuge nach Anspruch 6, **dadurch gekennzeichnet, dass** jedes Paar Nockenwellen (30, 32, 34, 36) eines jeden Zylinderkopfes von einer einzigen Kraftübertragungseinrichtung (24, 22) und von einem einzigen mit Ausgleichsgewichten (52, 54) versehenen Antriebszahnrad (40, 38) angetrieben wird.

8. Verbrennungsmotor (10) für Kraftfahrzeuge nach einem der vorhergehenden Ansprüche, **dadurch gekennzeichnet, dass** er ein V-förmiger Motor ist.

9. Verbrennungsmotor (10) für Kraftfahrzeuge nach einem der vorhergehenden Ansprüche, **dadurch gekennzeichnet, dass** die Kurbelwelle (14) ebenfalls mit Ausgleichsgewichten zum Schwingungsausgleich versehen ist.

## Claims

1. Internal combustion engine (10) of an automotive vehicle of the type wherein a crankshaft (14) mounted in a rotating manner in the engine block (12) drives longitudinal balancing means comprising balancing weights (52, 54) intended to allow dynamic balancing, said means being constituted by two separate gear wheels (38, 40) respectively driven from each of the longitudinal extremities of the crankshaft (14) **characterised in that** it comprises at least two opposite timing controls (22, 24) that are arranged transversely respectively at each of the opposite longitudinal extremities (18, 20) of the engine block (12), and **in that** the gear wheels carrying the balance weights are drive gear wheels (38, 40) of said controls (22, 24).

2. Internal combustion engine (10) of an automotive vehicle according to claim 1, **characterised in that** the timing controls are cascades of gear wheels (22, 24).

3. Internal combustion engine (10) of an automotive vehicle according to claim 1 or 2, **characterised in that** the balance weights are attached to the gear wheels (38, 40).

4. Internal combustion engine (10) of an automotive vehicle according to claim 1, 2 or 3, **characterised in that** the balance weights are integral with the gear wheels (38, 40).

5. Internal combustion engine (10) of an automotive vehicle according to any one of the preceding claims, **characterised in that** the balance weights (52, 54) carried by the gear wheels (38, 40) are offset by either 0° or 180° with respect to one another.

6. Internal combustion engine (10) of an automotive vehicle according to any one of the preceding claims, **characterised in that** it comprises two cylinder heads (28, 26) that each carry two camshafts (30, 32, 34, 36), each pair of camshafts (30, 32, 24, 36) of each cylinder head (28, 26) being driven by a single one of the gear wheels (40, 38) comprising balance weights (52, 54).

7. Internal combustion engine (10) of an automotive vehicle according to claim 6, **characterised in that** each pair of camshafts (30, 32, 34, 36) of each cylinder head is driven by a single timing control (24, 22) and a single one of the gear wheels (40, 38) carrying balance weights (52, 54).

8. Internal combustion engine (10) of an automotive vehicle according any one of the preceding claims, **characterised in that** it is a V-engine.

9. Internal combustion engine (10) of an automotive vehicle according to any one of the preceding claims, **characterised in that** the crankshaft (14) is also equipped with balancing weights.
